Europäisches Patentamt

European Patent Office

Office européen des brevets

(19)

(11) EP 1 643 687 A1

(12) EUROPEAN PATENT APPLICATION

(43) Date of publication:
05.04.2006 Bulletin 2006/14

(51) Int Cl.:
H04L 12/28 (2006.01)      H04Q 7/36 (2006.01)

(21) Application number: 05255875.6

(22) Date of filing: 22.09.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 30.09.2004 US 953356

(71) Applicant: LUCENT TECHNOLOGIES INC.
Murray Hill, New Jersey 07974-0636 (US)

(72) Inventors:
• Golestani, S. Jamaloddin
  New Providence, NJ 07974 (US)
• Rastogi, Rajeev
  Chatham, NJ 07928 (US)
• Smith, Mark Anthony Shawn
  Jersey City, NJ 07302 (US)

(74) Representative: Sarup, David Alexander et al
Lucent Technologies EUR-IP UK Limited
5 Mornington Road
Woodford Green, Essex IG8 0TU (GB)

(54) **Methods and devices for approximating optimal channel allocations**

(57) Channels are allocated to access points (APs) within a wireless, local area network (WLAN) in a reasonable time period using approximation methods. One approximation method guarantees channel allocations will be no less than 1/6 of an optimal channel allocation scheme provided the interference pattern associated with APs within a given WLAN conform to a unit disk graph interference pattern.

# FIG. 1

**Description**

## BACKGROUND OF THE INVENTION

U.S. Patent Application No. 10/953,355, the disclosure of which is incorporated herein as if set forth in full herein, introduced novel techniques for allocating channels to access points ("APs") (e.g., base stations) within wireless local area networks (WLANs). These techniques overcome problems related to interference, among other things.

However, if a WLAN contains more than a few APs, the time required to determine the specific channels to allocate to given APs using the techniques disclosed in U.S. Patent Application No. 10/953,355 becomes exponentially large (i.e., it takes too long).

It is, therefore, desirable to provide for methods and devices for allocating channels to APs within a WLAN within a reasonable time period.

## SUMMARY OF THE INVENTION

We have recognized that channels may be allocated to APs in a WLAN within a reasonable time period by computing a sum of weights associated with APs that have been allocated a channel, provided, the channel allocation process adheres to certain guidelines discussed in more detail below. The sum which is computed amounts to an approximation of a maximized sum which is associated with an optimal channel allocation scheme. In addition, when it can be shown that APs of a given WLAN conform to an interference pattern that can be represented by a unit disk graph (i.e., a special type of interference graph), then the computed sum can be said to be within a predictable range of an optimal channel allocation scheme (e.g., no less than 1/6 of an optimal channel allocation scheme).

## BRIEF DESCRIPTION OF THE DRAWINGS

FIG. 1 depicts a number of APs making up a WLAN.

FIG. 2 depicts an example of an interference graph associated with the APs in FIG. 1.

## DETAILED DESCRIPTION OF THE INVENTION

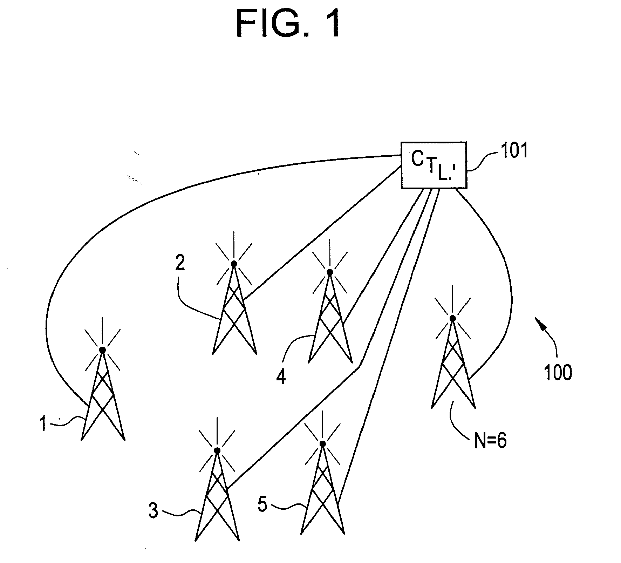

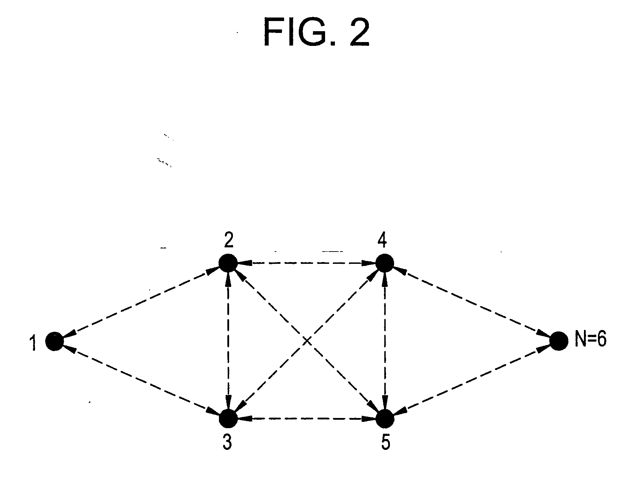

Referring now to FIG. 1, there is shown a WLAN 100 which is made up of a number of APs 1,2,...N where N is the last AP and represents a total number of APs within WLAN 100. The interference relationships between each of the APs 1,2,...N can be represented by an interference graph as depicted in FIG. 2. In FIG. 2, the arrows represent interference relationships between APs 1,2,...N where it is understood that an interference relationship amounts to a concurrent transmission using the same channel by a pair of APs connected by an arrow. Suppose that the WLAN 100 in FIG. 1 is given three channels to allocate between APs 1,2,...N. One of ordinary skill in the art will recognize that, given only three channels, there is no way to allocate a channel to each AP 1,2,...N without at least one pair of connected (and hence interfering) APs being assigned the same channel.

U.S. Patent Application No. 10/953,355, referred to above, provides techniques for overcoming problems related to interference (and a limited number of channels) in order to allocate channels. Briefly, techniques disclosed in U.S. Patent Application No. 10/953,355 involve the adoption of a time-frame-based, channel allocation architecture, where an allocation vector is used to identify a set of active WLAN APs. Thereafter, one or more channels is allocated to each active AP within each frame.

The present invention adopts a similar frame-based channel allocation architecture where it is assumed that only active WLAN APs will be allocated a channel during a given frame.

That said, the goal of the present invention is to provide for techniques which allow a network operator or the like to determine, within a reasonable time period, which channels should be allocated to which APs. It is to this challenge that we now turn.

We begin by recognizing that the APs 1,2...N of WLAN 100 shown in FIG. 1 can be represented by an interference graph defined by G = ($V$, $E$) where G represents the interference graph, V represents the set of APs each of which is referred to as a vertex and E represents the set of edges between a pair of vertices. An edge is said to exist between a pair of vertices (APs) when it is determined that interference is created when both vertices in the pair attempt to transmit using the same channel.

For the most part, the present invention will assume that interference graphs are generated by other network equipment or by network operators or the like. Thus, given a particular interference graph G, the challenge becomes to allocate channels to APs represented within such a graph in a reasonable time period taking into consideration the interference relationship between each AP, the limited number of channels available, and the potentially large number of APs, N. Those of ordinary skill in the art will appreciate that this is a nontrivial, daunting challenge.

The channel allocation problem can be represented by the following relationship:

$$c*(t) = \arg \max_{\forall c \in C} \sum_{\forall n \in U} W_n \qquad (1)$$

where $c*(t)$ is an optimal channel allocation vector, for a time frame, t, as determined in Equation (1), $c$, is an arbitrary channel allocation vector, C is a feasible set of channels, U is the set of APs that are activated in accordance with the channel allocation vector, $c$, and $W_n$ represents a weight assigned to a given AP, n. It should be noted that the channel allocation vector, $c$, and feasible set, C, referred to in Equation (1) are defined and discussed in more detail in previously filed U.S. Patent Application No. 10/953,355, referred to above.

In accordance with the present invention, $W_n$ can be defined as:

$$W_n \underline{\underline{\mathrm{def}}} \, \mu_n \cdot Q_n(t) \qquad (2)$$

where $\mu_n$ is a constant transmission rate for a given AP, n, and $Q_n(t)$ is a packet queue size of AP, n, during time frame t

In accordance with the present invention, the challenge becomes solving Equation (1) in order to determine the set of active APs and to allocate channels to all active APs within a reasonable time period while adhering to certain restrictions imposed as a result of AP interference and the limited number of channels available for allocation.

Before continuing, it should be noted that the inventors have developed proofs to support Equations (1) and (2). Because one of ordinary skill in the art can understand and practice the present invention without these proofs, they have been omitted. Their omission, it is hoped, also helps focus the discussion herein, making it easier to follow and comprehend.

. In accordance with the present invention, the inventors discovered techniques for approximating the maximized sum, $\Sigma W_n$, in Equations (1) and (2).

As will be discussed in more detail below, the inventors discovered an approximation technique where a computed sum of weights of all active APs (i.e., APs that have been allocated a channel) acts as an approximation of the maximized sum, $\Sigma W_n$. In addition, the present inventors discovered that if a given set of APs making up a WLAN conformed to a special interference pattern, known as a unit disk graph, then the so-computed sum could be relied on as being no less than 1/6th of the maximized sum ($\Sigma W_n$). That is, in the latter case, the techniques discovered by the present inventors compute a sum which, when used to allocate channels to APs, ensures a network operator that the allocation scheme will be within a certain range of an optimal channel allocation. Some network operators may view this as a guarantee of sorts; i.e., the techniques of the present invention can be guaranteed to generate channel allocations within a certain range of an optimal allocation scheme provided a particular AP interference pattern conforms to a unit disk graph.

To approximate the maximized sum $\Sigma W_n$, the present inventors discovered that an interference graph $G$ ($V$, $E$) comprising APs (or vertices) V, where each AP is assigned a weight and where interfering APs are connected by an edge E was important in arriving at their approximations.

In accordance with the present invention, it will be assumed that any channel that is allocated is selected from among a limited set of available channels, 1,2...F.

To ensure that the approximation techniques take into account interference among APs, the present invention also requires that no two APs which are a part of an edge may be allocated the same channel. Said another way, the present invention will not allow the same channel to be allocated to two substantially interfering APs.

With these two guidelines in mind, the present inventors derived what is known as a "Greedy Heuristic" approximation technique in order to allocate channels of a WLAN in a reasonable time period.

In one embodiment of the present invention, the active APs or vertices in a given interference graph form an activation set U. In general, this activation set represents the set of all APs which can be allocated a channel by using the guidelines set forth above.

More specifically, as an initial step in the present invention, a representative list of ordered APs is generated based on weights assigned to the APs. Conceptually, the present invention involves an attempt to allocate a channel to each AP within the representative list proceeding from the AP with the highest weight to the AP with the lowest weight. For example, referring back to FIG. 2, if AP 1 is assigned the weight of 10, AP 2 is assigned the weight of 20, AP 3 is assigned the weight of 30 ... and AP N is assigned the weight of 10N, then the representative list of ordered APs would comprise APs 1,2...N placed in an order based on their assigned weights. For example, because 10N is the highest weight and 10 is the lowest weight, a representative list would place the AP N with the highest weight (i.e., 10N) as the first entry (highest order), followed by the node which is associated with the next highest weight, etc. This process continues until the AP with the lowest weight, AP 1, is placed last in the order. In sum, it can be said that the representative list consists of an ordered set of APs arranged in an order by decreasing weight.

After generating such an ordered list, the present invention then attempts to allocate a channel from among a set of available channels to the one or more so-ordered APs keeping in mind, however, that the same channel cannot be allocated to a subsequent ordered AP when the subsequent ordered AP and a previously ordered AP substantially interfere with one another. For example, if channel number 1 is allocated to AP N in FIG. 2, a different channel will have to be allocated to the next highest AP, AP 5, because APs N and 5 are connected to form an edge indicating that they substantially interfere with one another. Thus, in accordance with the present invention, a different channel must be allocated to AP 5. This assumes that a different channel is available to be allocated. If no channel is available to be allocated, then no channel will be allocated to AP 5.

In sum, channels are allocated to APs in the ordered list such that two different channels are allocated to any pair of APs (e.g., AP N and AP 5) that are connected by an edge in an interference graph.

Each time an attempt is made to allocate a channel, the edge or interference guidelines discussed above must be applied.

At some point in time the process of attempting to allocate channels to all APs will be completed. Thereafter, the present invention then identifies those APs which have been so allocated a channel. These APs make up the active set, U. Once the active set, U, has been identified, the present invention then computes a sum of all of the weights which are associated with the APs which have been identified as being part of the active set (i.e., those APs which have been allocated a channel).

The resulting sum of all the weights of APs with an active set, U, represents an approximation of the maximized sum $\Sigma W_n$ associated with an optimal channel allocation given by Equation (1).

Though the technique just discussed provides an approximation of a maximized sum which can be used to arrive at a channel allocation, the present inventors realized that it would be highly desirable to provide network operators and the like with some type of guarantee that the channel allocations which resulted from such approximations were within a certain range of an optimal channel allocation.

To this end, the present inventors discovered that if the APs of a given WLAN conform to a specialized interference graph known as a unit disk graph, then the computed sum discussed above could be guaranteed to be no less than 1/6th of the maximized sum $\Sigma W_n$.

Though the term unit disk graph may be known by those skilled in the art, for the benefit of the reader, we define a unit disk graph as an interference graph consisting of vertices and edges where: (a) any two vertices located within a unit distance must be connected by an edge; and (b) any pair of vertices separated by a distance more than the unit distance should not be so connected. For the sake of completeness, it should be understood that the "unit distance" used in determining whether the vertices should be connected by an edge is a matter of definition. That is, a unit distance may be defined as being any desired distance (as may be dictated by the effective interference range for a set of APs).

In sum, if the interference graph representing a particular WLAN conforms to a unit disk graph, then the computed sum discussed above can be relied on to give a channel allocation scheme that is guaranteed to be within a certain range, in this case less than 1/6th of an optimal channel allocation scheme.

The discussion above has focused on methods and processes for approximating a solution to the channel allocation problem given by Equation (1). It should be realized that these methods and processes can be implemented in one or more devices, such as a controller 101 shown in FIG. 1. That is, controller 101 may be operable to carry out each of the steps discussed above in order to generate a channel allocation scheme which approximates an optimal channel allocation scheme or one which generates an approximation scheme which is guaranteed to be no less than 1/6th of an optimal channel allocation scheme. Though the controller 101 is shown as being separate from APs 1,2...N, in alternative embodiments of the present invention this controller may be contained within one or more of the APs or co-located next to one or more of the APs 1,2...N. When the APs 1,2...N comprise base stations, then the controller 101 may comprise a base station controller.

The above discussion attempts to set forth some examples of the present invention. The true scope of the present invention, however, is given by the claims which follow.

**Claims**

**1.** A method for allocating channels within a wireless local area network (WLAN) comprising:

allocating a channel, from among a set of available channels, to one or more ordered access points (APs) associated with an interference graph, provided a same channel cannot be allocated to a subsequent ordered AP and a previously ordered AP that substantially interfere with one another; and

computing a sum of weights of all APs that have been allocated a channel, wherein the computed sum is an approximation of a maximized sum associated with optimal channel allocations.

**2.** The method of claim 1 wherein the computed sum is no less than 1/6th of the maximized sum, provided the interference graph is a unit disk graph.

**3.** The method as in claim 1 further comprising:

generating a representative list of ordered APs based on weights assigned to the APs,
wherein an AP with a higher weight is placed in a higher order within the list than an AP associated with a lowered weight.

**4.** The method as in claim 3 wherein a weight assigned to each AP is defined by:

$$W_n = \mu_n Q_n(t)$$

where $W_n$ is the weight assigned to each AP, $\mu_n$ is a transmission rate constant for an active AP, and $Q_n(t)$ is a queue size of an active AP during time frame t

**5.** A device for allocating channels within a wireless local area network (WLAN) operable to:

allocate a channel, from among a set of available channels, to one or more ordered APs associated with an interference graph, provided a same channel cannot be allocated to a subsequent ordered AP and a previously ordered AP that substantially interfere with one another; and
computing a sum of weights of all APs that have been allocated a channel, wherein the computed sum is an approximation of a maximized sum associated with optimal channel allocations.

**6.** The device as in claim 5 further comprising:

generating a representative list of ordered APs based on weights assigned to the APs,
wherein an AP with a higher weight is placed in a higher order within the list than an AP associated with a lower weight.

**7.** The device as in claim 6 wherein a weight assigned to each AP is defined by:

$$W_n = \mu_n Q_n(t)$$

where $W_n$ is the weight assigned to each AP, $\mu_n$ is a transmission rate constant for an active AP, and $Q_n(t)$ is a queue size of an active AP during time frame t.

**8.** A device for assigning channels to some APs represented within an interference graph G (V, E), where V represents a number of APs and E represents a number of edges formed by APs that substantially interfere with one another, operable to:

identify a set of available channels; and
allocate a channel to one or more APs, provided, that two different channels are allocated to any pair of APs that are connected by an edge in the interference graph.

**9.** The device as in claim 8 further operable to:

identify those APs which have been allocated a channel, wherein each identified access point is associated with a weight, $W_n$; and
compute a sum of weights from the identified APs.

**10.** The device as in claim 9 wherein the weight $W_n$ of each AP is defined by:

$$W_n = \mu_n Q_n(t),$$

where $W_n$ is the weight assigned to each AP, $\mu_n$ is a transmission rate constant for an active AP, and $Q_n(t)$ is a queue size of an active AP during time frame t

# FIG. 1

# FIG. 2

# EP 1 643 687 A1

| | **European Patent Office** | **EUROPEAN SEARCH REPORT** | **Application Number** EP 05 25 5875 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 1 587 254 A (LUCENT TECHNOLOGIES INC) 19 October 2005 (2005-10-19) * the whole document * ----- | 1-10 | H04L12/28 H04Q7/36 |
| X | RAMANATHAN S: "A unified framework and algorithm for (T/F/C)DMA channel assignment in wireless networks" INFOCOM '97. SIXTEENTH ANNUAL JOINT CONFERENCE OF THE IEEE COMPUTER AND COMMUNICATIONS SOCIETIES. DRIVING THE INFORMATION REVOLUTION., PROCEEDINGS IEEE KOBE, JAPAN 7-11 APRIL 1997, LOS ALAMITOS, CA, USA,IEEE COMPUT. SOC, US, vol. 2, 7 April 1997 (1997-04-07), pages 900-907, XP010252059 ISBN: 0-8186-7780-5 * page 901, left-hand column, line 46 - page 903, right-hand column, line 12 * ----- | 1-10 | |
| X | MAHONEN P ET AL: "Automatic channel allocation for small wireless local area networks using graph colouring algorithm approach" PERSONAL, INDOOR AND MOBILE RADIO COMMUNICATIONS, 2004. PIMRC 2004. 15TH IEEE INTERNATIONAL SYMPOSIUM ON BARCELONA, SPAIN 5-8 SEPT. 2004, PISCATAWAY, NJ, USA,IEEE, vol. 1, 5 September 2004 (2004-09-05), pages 536-539, XP010754659 ISBN: 0-7803-8523-3 | 1,3,5,6, 8 | **TECHNICAL FIELDS SEARCHED (IPC)** H04Q H04L |
| A | * the whole document * ----- | 2,4,7,9, 10 | |
| A | WO 01/80500 A (CARNEGIE MELLON UNIVERSITY) 25 October 2001 (2001-10-25) * page 13, line 10 - page 15, line 22; figures 16-18 * ----- | 1-10 | |

The present search report has been drawn up for all claims

| Place of search | Date of completion of the search | Examiner |
|---|---|---|
| The Hague | 23 December 2005 | Poort, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 25 5875

This annex lists the patent family members relating to the patent documents cited in the above-mentioned European search report.
The members are as contained in the European Patent Office EDP file on
The European Patent Office is in no way liable for these particulars which are merely given for the purpose of information.

23-12-2005

| Patent document cited in search report | | Publication date | Patent family member(s) | | Publication date |
|---|---|---|---|---|---|
| EP 1587254 | A | 19-10-2005 | CN | 1684439 A | 19-10-2005 |
| | | | JP | 2005304036 A | 27-10-2005 |
| | | | US | 2005226191 A1 | 13-10-2005 |
| WO 0180500 | A | 25-10-2001 | AU | 5327401 A | 30-10-2001 |
| | | | US | 6636737 B1 | 21-10-2003 |

EPO FORM P0459

For more details about this annex : see Official Journal of the European Patent Office, No. 12/82